# EUROPEAN PATENT SPECIFICATION

(11) **EP 3 936 820 B1**
(45) Date of publication and mention of the grant of the patent: **18.06.2025**
(21) Application number: 21183363.7
(22) Date of filing: 02.07.2021
(51) Int. Cl.: G01C 15/00, G01S 7/481

(54) **SURVEYING APPARATUS**
VERMESSUNGSVORRICHTUNG
SYSTÈME D'ARPENTAGE

(30) Priority: 09.07.2020 JP 2020118605
(43) Date of publication of application: 12.01.2022
(73) Proprietor: TOPCON CORPORATION, Tokyo 174-8580 (JP)
(72) Inventor: KIKUCHI, Takeshi, Tokyo 174-8580 (JP)
(74) Representative: dompatent von Kreisler Selting Werner - Partnerschaft von Patent- und Rechtsanwälten mbB

(56) References cited:
- EP-A1- 3 226 029
- JP-A- 2019 148 946
- US-A1- 2012 057 174
- US-A1- 2016 377 722
- US-A1- 2019 064 328

## Description

### TECHNICAL FIELD

The present invention relates to a surveying apparatus, and more specifically, to a surveying apparatus having a projector function.

### BACKGROUND

Conventionally, a total station and a three-dimensional scanner are known as a surveying apparatus that transmits distance-measuring light and acquires coordinates of an irradiation point as measurement data. The coordinates of the irradiation point are acquired by measuring a distance to an irradiation point by receiving reflected distance-measuring light reflected by a measuring object and measuring an angle to the irradiation point by detecting an angle of the distance-measuring light (for example, refer to Patent Literature 1).

In the conventional surveying apparatus, for visual confirmation of acquired measurement data, a display image is created by using an information processing device such as a personal computer and the display image is displayed on a display (for example, refer to Patent Literature 2).
Patent Literature 3 describes a surveying device comprising a base defining a base axis (A), a support structure arranged to be rotatable around the base axis (A) and defining a rotation axis (B), a light emitting unit for emitting measuring signal and a light receiving unit comprising a detector for detecting reflected measuring signal. In Patent Literature 3, a rotation unit is mounted on the support structure for providing emission and reception of measuring light in defined directions, wherein the rotation unit comprises a rotation body which is mounted rotatable around the rotation axis (B) and the rotation body comprises a scanning mirror which is arranged tilted relative to the rotation axis (B). The device of Patent Literature 3 comprises at least one projector fixedly arranged with the support structure, defining a particular optical axis and configured to direct a light pattern at a scene, wherein position and shape of the pattern are controllable by the controlling and processing unit. Patent Literatures 3-7 describe additional state of the art for the present invention.

### CITATION LIST

### Patent Literatures

Patent Literature 1 Japanese Published Unexamined Patent Application No. 2018-048868
Patent Literature 2 Japanese Published Unexamined Patent Application No. 2018-045587
Patent Literature 3 US 2019/064328 A1
Patent Literature 4 EP 3 226 029 A1
Patent Literature 5 US 2016/377722 A1
Patent Literature 6 US 2012/057174 A1
Patent Literature 7 JP 2019 148946 A

### SUMMARY OF INVENTION

### Technical Problem

However, there was no surveying apparatus capable of projecting measurement data onto a real space by using a projector device for visual confirmation of the measurement data.

The present invention has been made in view of these circumstances, and an object thereof is to enable on-site visual confirmation of measurement data by projecting the measurement data onto a measuring object.

### Solution to Problem

### The present invention is defined in claim 1.

In order to achieve the object, a surveying apparatus according to an aspect of the present invention includes a distance-measuring unit configured to transmit distance-measuring light and measure a distance to a measurement point by receiving reflected distance-measuring light reflected by a measuring object; an angle-measuring unit configured to measure an angle to the measurement point by detecting an angle of the distance-measuring light; a control arithmetic unit including a survey unit configured to acquire three-dimensional coordinates of the measurement point as measurement data by performing distance and angle measurements by controlling the distance-measuring unit and the angle-measuring unit, a projection image generating unit configured to generate a projection image for displaying the measurement data on a surface of the measuring object by acquiring a three-dimensional shape of the measuring object based on the measurement data, and a projection control unit configured to control projection of the projection image onto the measuring object; and an image projecting unit including a display element configured to form an image as the projection image, a light irradiating device configured to cause projection light to enter the display element, and a projector lens configured to project the projection image emitted from the display element onto the measuring object.

In the aspect described above, it is also preferable that the projection image generating unit generates, as the projection image, an image displaying the measurement point as a point.

In the aspect described above, it is also preferable that the projection image generating unit generates, as the projection image, an image displaying irregularities on a surface of the measuring object in a recognizable manner.

In the aspect described above, it is also preferable that the surveying apparatus further includes a storage unit configured to store design data of the measuring object, wherein
the projection image generating unit generates an image displaying a difference between the design data and the measurement data in a recognizable manner.

According to the invention, the distance-measuring light is pulsed light, and the surveying apparatus is a laser scanner configured to acquire three-dimensional point cloud data of the measuring object by scanning with the distance-measuring light in the vertical direction and the horizontal direction, and the projection image generating unit generates, as the projection image, an image displaying levels of point cloud density of the three-dimensional point cloud data in a recognizable manner.

In the aspect described above, it is also preferable that an instrument center and an origin of coordinates of the projection image match each other, and an optical axis of the distance-measuring unit and an optical axis of the image projecting unit are configured to be opposed to each other on a common straight line.

### Benefit of Invention

According to the aspects described above, the surveying apparatus is configured to generate a projection image for measurement data confirmation and project the projection image onto a surface of a measuring object in a real space, so that the measurement data can be visually and intuitively confirmed on-site.

### BRIEF DESCRIPTION OF DRAWINGS

FIG. 1 is an external general view of a surveying apparatus according to a first embodiment.
FIG. 2 is a configuration block diagram of the same surveying apparatus.
FIG. 3 is a diagram describing a configuration of a distance-measuring unit and an image projecting unit of the same surveying apparatus.
FIG. 4 is a flowchart of operation of the same surveying apparatus.
FIG. 5 is a view illustrating an example of a projection image projected by the same surveying apparatus.
FIG. 6 is an external general view of a surveying apparatus according to a second embodiment.
FIG. 7 is a configuration block diagram of the same surveying apparatus.
FIG. 8 is a diagram illustrating a configuration of a distance-measuring unit and an image projecting unit of the same surveying apparatus.
FIG. 9 is a view illustrating an example of a projection image that the same surveying apparatus projects.
FIG. 10 is a view illustrating another example of a projection image that the same surveying apparatus projects.
FIG. 11 is a configuration block diagram of a surveying apparatus according to a third embodiment.
FIG. 12 is a view illustrating an example of a projection image projected by the same surveying apparatus.

### DESCRIPTION OF EMBODIMENTS

Preferred embodiments of the present invention will be described with reference to the drawings. In the following description of the embodiments, the same configurations are provided with the same reference signs, and corresponding configurations are provided with the same names, and overlapping descriptions are omitted as appropriate. In each drawing, components are properly scaled and schematically illustrated for convenience of description, and may not reflect actual proportions. The following embodiments are examples, and the present invention is not limited to these.

### 1. First Embodiment

### 1.1 Configuration of Surveying Apparatus

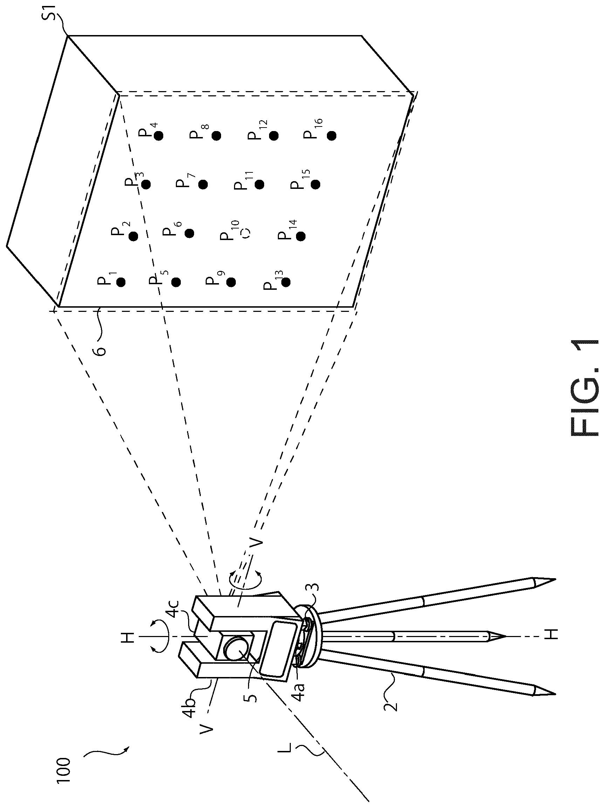

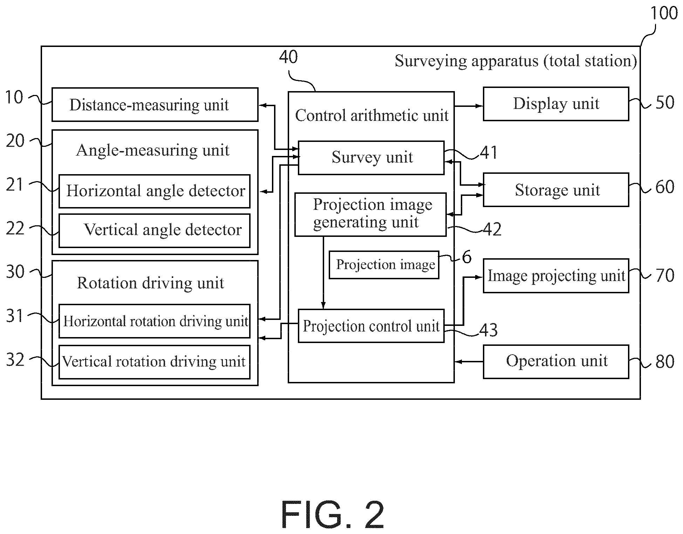

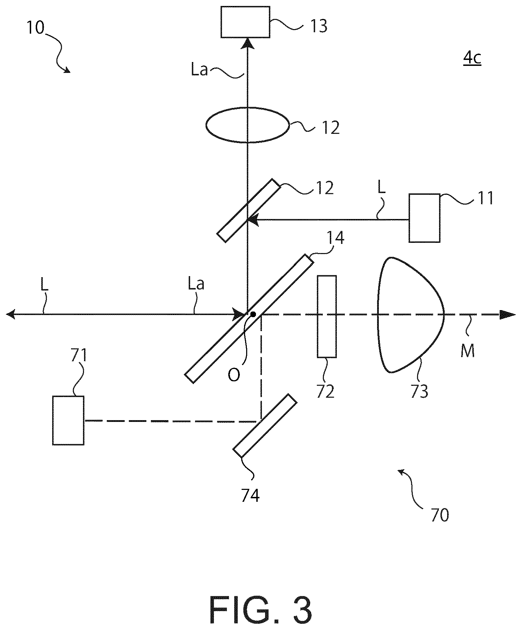

FIG. 1 is an external view illustrating a state where a surveying apparatus 100 according to a first embodiment is projecting a projection image 6. FIG. 2 is a configuration block diagram of the surveying apparatus 100, and FIG. 3 is a schematic view describing configurations of a distance-measuring unit 10 and an image projecting unit 70. The projection image 6 can include various modifications (for example, projection images 6a to 6c) as described later, and the projection image 6 is representatively described in a common description.

In the present embodiment, the surveying apparatus 100 is a so-called motor-driven total station. The surveying apparatus 100 is installed at a known point via a tripod 2 and a leveling base 3 mounted on the tripod 2. In appearance, the surveying apparatus 100 includes a base portion 4a to be removably mounted on the leveling base 3, a bracket portion 4b provided horizontally rotatably 360° around an axis H-H on the base portion 4a, and a telescope 4c provided vertically rotatably about an axis V-V in a recessed portion 5 of the bracket portion 4b.

As illustrated in FIG. 2, the surveying apparatus 100 includes the distance-measuring unit 10, an angle-measuring unit 20, a rotation driving unit 30, a control arithmetic unit 40, a display unit 50, a storage unit 60, the image projecting unit 70, and an operation unit 80.

The distance-measuring unit 10 is disposed inside the telescope 4c, and generally includes, as illustrated in FIG. 3, a light emitting element 11, a distance-measuring optical system 12, and a light receiving element 13. The distance-measuring unit 10 emits distance-measuring light L from the light emitting element 11 through the distance-measuring optical system 12 to irradiate a measuring object through a double-sided mirror 14, and receives reflected light La from the measuring object by the light receiving element 13 through the double-sided mirror 14 and the distance-measuring optical system 12. Based on a phase difference between a light emission signal and a light reception signal acquired by the distance-measuring unit 10, a distance to the irradiation point can be measured. The distance-measuring unit 10 is not limited to this, and may be provided with a publicly known configuration included with a light wave distance meter. For example, the distance-measuring unit 10 can further include an eyepiece lens, etc., for enabling a user to perform collimation toward a collimation direction.

The double-sided mirror 14 is between the distance-measuring unit 10 and the image projecting unit 70, and is fixed to the telescope 4c and rotates about the axis V-V integrally with the telescope 4c. The double-sided mirror 14 reflects the distance-measuring light L by one surface and reflects projection light M by the other surface so that optical axes of the distance-measuring light L and the projection light M advance toward directions opposite to each other on the same axis.

The angle-measuring unit 20 includes a horizontal angle detector 21 and a vertical angle detector 22. The horizontal angle detector 21 and the vertical angle detector 22 are, for example, rotary encoders.

The rotation driving unit 30 includes a horizontal rotation driving unit 31 and a vertical rotation driving unit 32. The horizontal rotation driving unit 31 is a motor, and is provided on the base portion 4a and rotates the bracket portion 4b horizontally about the axis H-H. The horizontal angle detector 21 is provided on a rotary shaft portion of the horizontal rotation driving unit 31, and can detect a horizontal angle of the bracket portion 4b, that is, the horizontal angle detector 21 can detect a horizontal angle of the collimation direction of the telescope 4c.

The vertical rotation driving unit 32 is a motor, and is provided on the bracket portion 4b and rotates the telescope 4c vertically about the axis V-V. The vertical angle detector 22 is provided on a rotary shaft portion of the vertical rotation driving unit 32, and can detect a vertical angle of the collimation direction of the telescope 4c. Detection signals acquired by the distance-measuring unit 10 and the angle-measuring unit 20 are input into the control arithmetic unit 40.

The display unit 50 is, for example, a liquid crystal display, an organic EL (Electro Luminescence) display, etc. The display unit 50 displays survey results and operation screens, etc., according to control of the control arithmetic unit 40.

The storage unit 60 is a recording medium that stores, describes, saves, and transmits information in a computer-processable form, and stores various programs that fulfill functions of the control arithmetic unit 40 including functions of functional units described later. In addition, the storage unit 60 stores measurement data acquired by a survey unit 41 and a projection image 6 generated by a projection image generating unit 42. As the storage unit 60, a magnetic disc such as a hard disc drive, a magneto optical disc such as a CD (Compact Disc) and a DVD (Digital Versatile Disc), or a semiconductor memory such as a flash memory and a RAM (Random Access Memory) can be adopted.

The image projecting unit 70 is a projector device generally including a light irradiating device 71, a display element 72, and a projector lens 73 as illustrated in FIG. 3.

The light irradiating device 71 is a device including a light source (not illustrated) and configured to irradiate visible light as projection light M toward a display element 72 through a projecting optical system 74 and the double-sided mirror 14. As the light irradiating device 71, a color-separation type is adopted as an example. As the light source, a semiconductor light emitting element such as an LED (Light Emitting Diode) or a laser diode, or a lamp (halogen lamp, xenon lamp, etc.) can be adopted.

The display element 72 is a DMD (Digital Micromirror Device), a transmissive liquid crystal display panel, or a reflective liquid crystal display panel, having a plurality of pixels two-dimensionally arrayed. When the display element 72 is a DMD, pixels of the display element 72 are movable micromirrors, and when the display element 72 is a liquid crystal display panel, pixels of the display element 72 are liquid crystal shutter elements.

When the light irradiating device 71 is a color-separation type, the light irradiating device 71 has a white light source and a color separator, etc., and white light emitted from the white light source is separated into red (R), green (G), and blue (B) that are the three primary colors of light by the color separator. In this case, the display element 72 is prepared for each color, and the display elements 72 are irradiated with lights in the multiple colors, and lights transmitted through or reflected by the respective display elements 72 are synthesized.

As the light irradiating device 71, without being limited to the color-separation type, a time-division type, and an independent light source type which are adopted in a general projector device can be adopted. In each case, a display element 72 corresponding to the light irradiating device 71 can be adopted.

The projector lens 73 projects a display image formed by the display element 72 onto a measuring object. The projector lens 73 is capable of adjusting focusing and adjusting a focal length. The projector lens 73 is driven by a lens driving unit (not illustrated).

The lens driving unit performs zooming and focusing by driving lenses constituting the projector lens 73. Zooming and focusing may be performed by a user's operation, or may be performed by control of a projection control unit 43 described later.

The image projecting unit 70 is provided inside the telescope 4c as well as the distance-measuring unit 10. The distance-measuring unit 10 and the image projecting unit 70 are configured so that, for example, an optical axis of the distance-measuring light L of the distance-measuring unit 10 and an optical axis of the projection light M from the projecting unit are opposed to each other on a common axis. The common axis is an axis on the collimation axis of the telescope 4c passing through an instrument center O. Here, the instrument center O is an intersection between the axis H-H and the axis V-V, and is a point that becomes an origin of three-dimensional coordinates to be acquired by the surveying apparatus 100.

When the image projecting unit 70 is driven by the projection control unit 43, the light irradiating device 51 is driven, and projection light M is emitted and enters the display element 72. The display element 72 forms an image as a projection image 6. Next, through the projector lens 73, the image as the projection image 6 is projected onto a surface of the measuring object as a projection target.

The positional relationship between the distance-measuring unit 10 and the image projecting unit 70 does not necessarily have to be arranged so that they are opposed to each other on a common axis. What is required is that the positional relationship between the distance-measuring unit 10 and the image projecting unit 70 is known, and the projection image 6 and the measurement data can be converted into data in the same coordinate space.

The operation unit 80 is realized by any of, or a combination of any of all kinds of devices capable of receiving an input from a user and transmitting information related to the input to the control arithmetic unit 40. For example, the operation unit 80 includes hardware input means such as buttons, software input means displayed on the display unit 50 such as a touch panel display, and input means such as a remote controller.

The control arithmetic unit 40 executes functions and/or methods realized by codes or instructions included in various programs stored in the storage unit 60. The control arithmetic unit 40 may include, for example, a CPU (Central Processing Unit), a GPU (Graphics Processing Unit) microprocessor, and an ASIC (Application Specific Integrated Circuit), etc., and realize various processings disclosed in this specification by a logic circuit and a dedicated circuit formed in an integrated circuit, etc.

The control arithmetic unit 40 includes, as functional units, the survey unit 41, the projection image generating unit 42, and the projection control unit 43.

The survey unit 41 performs a survey by the surveying apparatus 100 and calculates coordinates of the irradiation point of the distance-measuring light L, that is, the measurement point. Specifically, by controlling the rotation driving unit 30, the telescope 4c collimates the measuring object, and by the distance-measuring unit 10 and the angle-measuring unit 20, a horizontal angle, a vertical angle, and a distance between the surveying apparatus 100 and (the irradiation point on) the measuring object are detected. In addition, the survey unit 41 calculates coordinates of the measurement point with respect to an instrument center O set as a center based on the acquired horizontal angle, vertical angle, and distance. The coordinates of the measurement point calculated by the survey unit 41 are stored as measurement data in the storage unit 60.

The projection image generating unit 42 calculates a three-dimensional shape of the measuring object based on the measurement data acquired by the survey unit 41 and is stored in the storage unit 60. Next, this three-dimensional shape data is read by three-dimensional computer graphics, and distortion correction for projecting the measurement data as a visually confirmable image on a screen corresponding to the surface shape of the measuring object, is performed to generate the projection image 6.

In the example illustrated in FIG. 1, as a visually confirmable image, an image displaying measurement points P₁ to P₉ and measurement points P₁₁ to P₁₆ as circular points is illustrated. As a distortion correction method, for example, spline warp correction and pin warp correction, etc., can be applied. Shapes and colors of the measurement points in the generated image may be changeable.

The projection control unit 43 drives the light irradiating device 71 to emit projection light M, and causes the projection light M to enter the display element 72. The projection control unit 43 performs a control to form an image as the projection image 6 by the projection light M reflected by or transmitted through the display element 72. Accordingly, the image as the projection image 6 is projected onto the surface of the measuring object as a projection target through the projector lens 73.

The projection control unit 43 directs the image projecting unit 70 toward the projection direction (measuring object) by controlling the rotation driving unit 30.

In addition, the projection control unit 43 performs zooming and focusing of the projection image 6 by driving the lens driving unit. In focusing, for example, the lens driving unit is controlled based on the measurement data so that a portion where the measurement points are linearly arranged and dense is set as a focal position. Alternatively, it is also possible that a user can designate a plane as a reference, and the lens driving unit is controlled so that the focal position is set on the plane.

### 1.2 Operation of Surveying Apparatus

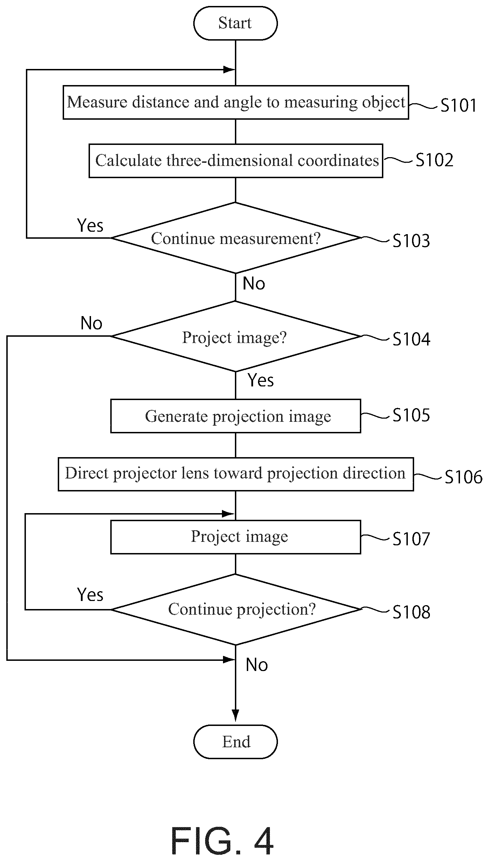

Next, operation of the surveying apparatus 100 will be described. FIG. 4 is a flowchart of operation of the surveying apparatus 100 in use. The on-site work illustrated in FIG. 1 is described.

The surveying apparatus 100 is installed at a known point. When operation of the surveying apparatus is started, in Step S101, the survey unit 41 collimates a measuring object S1 by driving the distance-measuring unit 10 and the angle-measuring unit 20, and measures a distance and an angle to a measurement point on the measuring object S1.

Next, in Step S102, the survey unit 41 calculates three-dimensional coordinates of the measurement point from the results of the distance and angle measurements. The acquired three-dimensional coordinates of the measurement point are stored as measurement data in the storage unit 60.

Next, in Step S103, the survey unit 41 displays a screen for confirming whether to continue the measurement on the display unit 50, and according to a user's selection, continuation (Yes) or end (No) of the measurement is selected.

When the measurement is continued (Yes), the processing returns to Step S101, and the survey unit 41 repeats Steps S101 to S103 to measure another measurement point.

On the other hand, when the measurement is ended (No), the processing shifts to Step S104. In Step S104, the projection image generating unit 42 displays a screen for confirming whether to project the image on the display unit 50, and according to a user's selection, it is selected to project the image (Yes) or not to project the image (No).

Here, when it is selected not to project the image (No), the control arithmetic unit 40 ends the processing. On the other hand, when it is selected to project the image (Yes), in Step S105, the projection image generating unit 42 generates the projection image 6 based on the measurement data stored in the storage unit 60.

Next, in Step S106, the projection control unit 43 directs the image projecting unit 70 (projector lens 73) toward the projection direction, that is, the measuring object S1 direction in a real space by driving the rotation driving unit 30.

Steps S105 and S106 do not necessarily have to be performed in this order. That is, when a user desires to project measurement data of a specific portion (for example, the measuring object S1 in FIG. 1) in a real space, it is also possible that after image projection is selected in Step S104, in Step S106, the projector lens 73 is directed toward the measuring object S1 by driving the rotation driving unit 30. In this case, by executing Step S105 next, the projection image 6 is generated based on the measurement data of the portion of the measuring object S1 in the image projecting unit 70.

Next, in Step S107, the projection control unit 43 controls the image projecting unit 70 to project the projection image 6 onto the measuring object S1 (FIG. 1). In FIG. 1, the projection image 6 displays the measurement points P₁ to P₉ and P₁₁ to P₁₆ as circular points arranged at even intervals vertically and horizontally on a surface of the three-dimensional structure S1. Here, a measurement point P₁₀ not displayed (illustrated with a dashed line) is a point that has not been measured for some reason. The measuring object S1 is simply schematically illustrated, and its shape is not particularly restricted.

Next, in Step S108, the projection control unit 43 stands by while confirming whether the end of projection is instructed, and when the end of projection is instructed (No), ends the processing.

The measurement in Steps S101 to S103 and the image projection in Steps S104 to S108 do not necessarily have to be performed as a series of operations, and may be performed as separate operations.

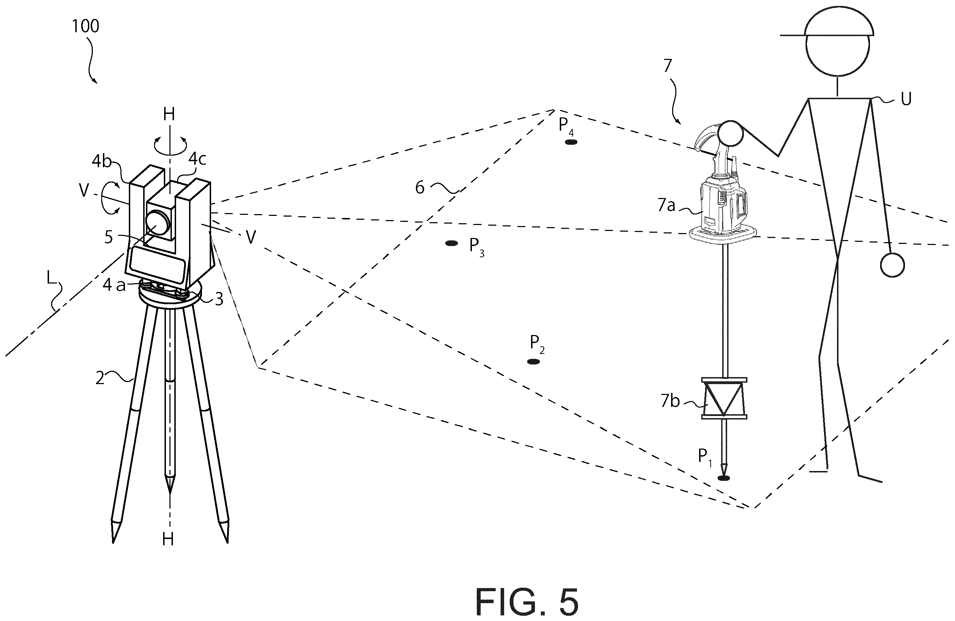

FIG. 5 is a view illustrating another usage state of the surveying apparatus 100. FIG. 5 illustrates a situation where staking points P₁ to P₄ are being set.

In the case of FIG. 5, a user U uses a remote catcher 7 including a fan beam transmitter 7a that transmits a fan beam and a prism 7b. The surveying apparatus 100 further includes a fan beam detector and an automatic tracking unit that automatically tracks the prism although not illustrated, and acquires three-dimensional coordinates of a staking point by measuring a distance and an angle to the prism vertically held on the staking point.

In the staking point setting work, as in a conventional manner, the user U holding the remote catcher 7 moves to each staking point and performs staking. Then, the operations of Steps S104 to S108 are performed, and the projection image 6 is projected onto a staking point setting region as a measuring object. Thus, the surveying apparatus 100 can also be used for confirming the staking points after staking.

### 1.3 Benefit

In the present embodiment, the surveying apparatus 100 is provided with the image projecting unit 70 so as to project measurement data onto a measuring object in a real space, so that measurement results can be confirmed on-site without being carried back to an office and converted into display data. In particular, by projection onto the measuring object in a real space, a data measurement situation in the real space can be grasped intuitively.

For example, in the situation illustrated in FIG. 1, only by confirming the projection image 6, omission of the measurement of the measurement point P₁₀ can be immediately recognized. In the situation illustrated in FIG. 5, whether a point at which staking has been actually performed matches a point measured as a staking point can be visually recognized.

In the present embodiment, by configuring the distance-measuring unit 10 and the image projecting unit 70 inside the telescope 4c so that their optical axes are opposed to each other on a common axis, the optical axis of the image projecting unit 70 can be matched with the optical axis of the distance-measuring unit 10 only by rotating the telescope 4c by 180° in the vertical direction, so that complicated arithmetic processing is not required when generating the projection image in the projection image generating unit 42, and the processing time can be shortened.

### 2. Second Embodiment

### 2.1 Configuration of Surveying Apparatus

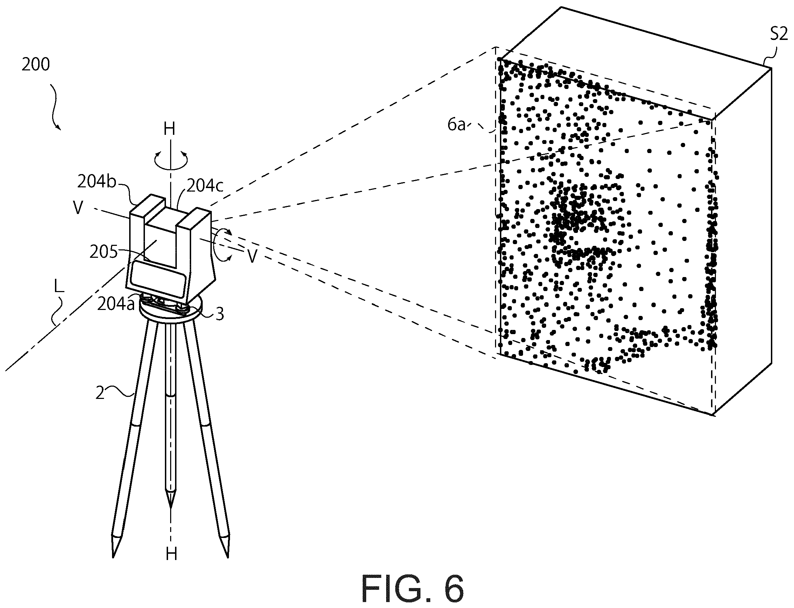

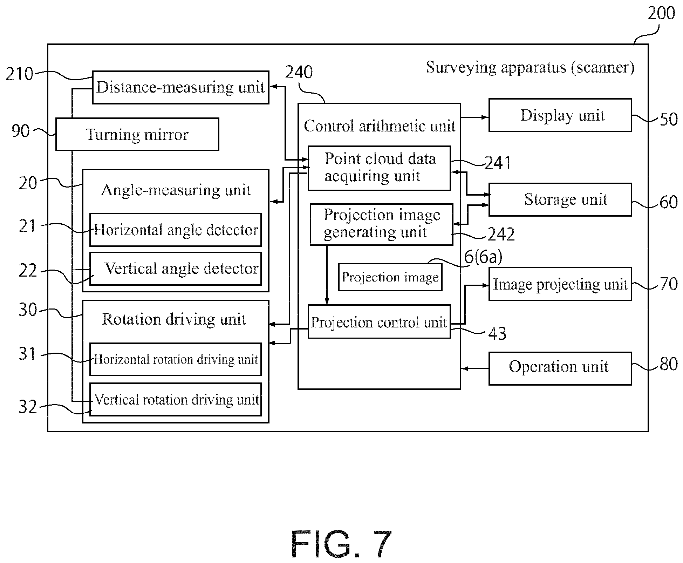

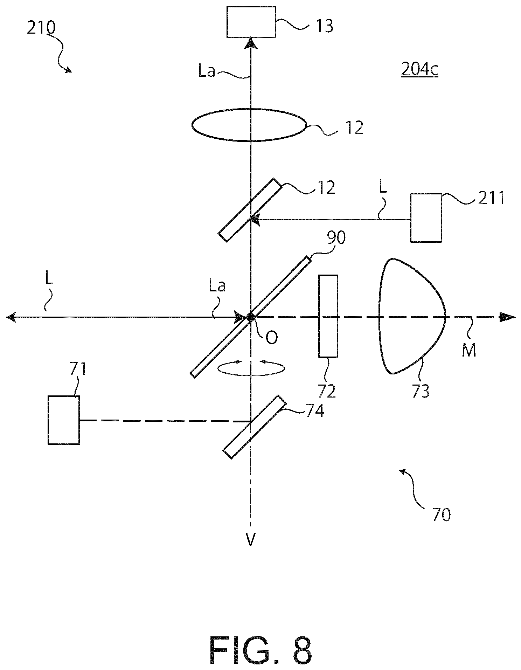

FIG. 6 is an external general view illustrating a state where a surveying apparatus 200 according to a second embodiment is projecting a projection image 6a. FIG. 7 is a configuration block diagram of the surveying apparatus 200, and FIG. 8 is a schematic view describing configurations of the distance-measuring unit 10 and the image projecting unit 70 disposed in a light projecting unit 204c.

In the present embodiment, the surveying apparatus 200 is a so-called three-dimensional laser scanner. The surveying apparatus 200 and the surveying apparatus 100 have a common configuration except for the following respects. First, in appearance, the surveying apparatus 100 includes the telescope 4c that rotates about the axis V-V in the recessed portion 5 of the bracket 4b, and on the other hand, the surveying apparatus 200 includes the light projecting unit 204c in a recessed portion 205 of a bracket portion 204b.

In addition, between the distance-measuring unit 210 and the image projecting unit 70 in FIG. 8, instead of the double-sided mirror 14 fixed to the telescope 4c, a turning mirror 90 is provided. The turning mirror 90 is a double-sided mirror, and like the double-sided mirror 14, the turning mirror 90 is configured so that emitting optical axes of the distance-measuring unit 210 and the image projecting unit 70 advance toward directions opposite to each other on the same axis.

In addition, the turning mirror 90 is connected to the vertical rotation driving unit 32 so that, by performing scanning around the axis V-V by setting the instrument center O as a center, scanning in the vertical direction with the distance-measuring light L can be performed. A light emitting element 211 emits a pulse laser light (pulsed light). In this way, the surveying apparatus 200 is configured to be capable of acquiring point cloud data of the entire circumference by scanning the entire circumference with the distance-measuring light L in the horizontal direction and the vertical direction.

When the image projecting unit 70 is driven, the turning mirror 90 does not rotate, and the turning mirror 90 and the image projecting unit 70 are fixed. The image projecting unit 70 may be configured to rotate integrally with the turning mirror 90 so as not to obstruct the optical path of the distance-measuring light L during scanning with the distance-measuring light L.

Functionally, as illustrated in FIG. 7, instead of including the survey unit 41 and the projection image generating unit 42 in the control arithmetic unit 40 in the surveying apparatus 100, the surveying apparatus 200 includes a point cloud data acquiring unit 241 and a projection image generating unit 242 in a control arithmetic unit 240.

The point cloud data acquiring unit 241 scans a measurement range (up to 360°) with the distance-measuring light L by driving the distance-measuring unit 210, the angle-measuring unit 20, and the rotation driving unit 30, acquires three-dimensional point cloud data of the measurement range, and stores the three-dimensional point cloud data in the storage unit 60.

Based on the point cloud data stored in the storage unit 60, the projection image generating unit 242 generates a projection image 6a in the same manner as in the projection image generating unit 42.

Operations of the surveying apparatus 200 and the surveying apparatus 100 in use are generally the same as in the flowchart of FIG. 4, however, instead of measuring distances and angles to the measurement points provided on the measuring object S2 one by one and acquiring three-dimensional coordinates of each point in Steps S101 to S103, the surveying apparatus 200 acquires point cloud data as measurement data.

The projection image 6a illustrated in FIG. 6 displays the respective points of point cloud data as circular points. Even in this case where the surveying apparatus 200 is a 3D laser scanner, the same effect as that of the first embodiment can be obtained in which measurement results can be confirmed on-site without being carried back to an office and converted into display data. In the projection image 6a in FIG. 6, omission of a point cloud is found in a lower right portion in a front view of the measuring object S2. This may occur due to temporary presence of an obstacle such as a vehicle between the measuring object S2 and the surveying apparatus 200 at the time of the measurement. In this way, a user can intuitively recognize a point cloud data acquisition omitted portion (acquiring situation).

### 2.2 Modifications of Projection Image

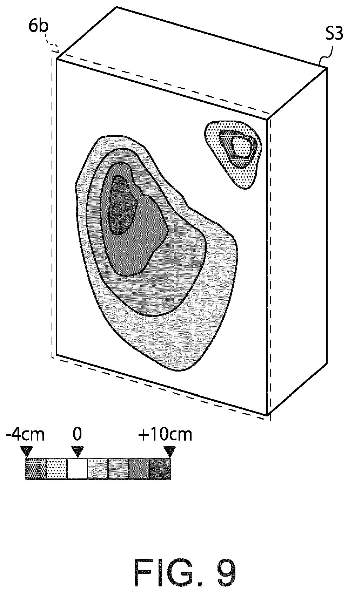

(1) FIG. 9 illustrates a projection image 6b according to an example, generated by the projection image generating unit 242. In the projection image 6b, irregularities on the surface of a measuring object S3 are displayed in a recognizable manner. In detail, differences in distance from the surface among the respective points of point cloud data are displayed like a heat map.

In this example, the projection image generating unit 242 calculates a three-dimensional shape of the measuring object S3 based on the measurement data (point cloud data) stored in the storage unit 60. Then, this three-dimensional shape data is read by three-dimensional computer graphics, and the surface of the measuring object is obtained.

An image that displays distances between the surface and the respective points in a direction orthogonal to the surface in a pattern like a so-called heat map by using different colors for each of predetermined ranges (for example, ranges of 0 to 2 cm, 2 to 4 cm ..., etc.) is generated. For example, in FIG. 9, around the center of the surface of the measuring object S3, a portion protruding by 10 cm is illustrated.

By projecting this projection image 6b onto the measuring object S3, the user can easily and intuitively recognize irregularities on the surface of the measuring object S3. In this case, even irregularities invisible to the naked eye are conspicuously displayed, and this is advantageous.

Alternatively, the same effect can be obtained even when the projection image generating unit 242 is configured to generate an image that displays irregularities on the surface of the measuring object S3 in a recognizable manner like a so-called depth map by using different colors for each of predetermined ranges corresponding to distances from the instrument center to the respective points.

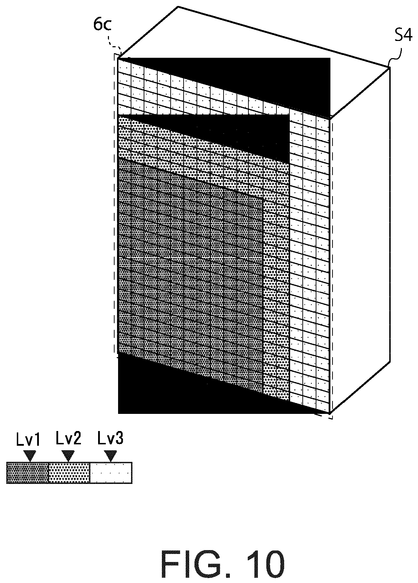

(2) FIG. 10 illustrates a projection image 6c according to another example, generated by the projection image generating unit 242. In the projection image 6c, a surface of a measuring object S4 is divided into grids (meshes) at predetermined intervals, and the respective squares are displayed in colors different according to levels of point cloud density in the square regions.

In this example, based on the measurement data (point cloud data) stored in the storage unit 60, the projection image generating unit 242 calculates a three-dimensional shape of the measuring object S4. Then, this three-dimensional shape data is read by three-dimensional computer graphics, and the surface of the measuring object S4 is obtained.

Then, the surface of the measuring object is divided into grids at predetermined intervals, and from the measurement data, point cloud densities in the respective squares are calculated and classified into 3 levels including level 1 (Lv. 1) set to 200 points or more/m³, level 2 (Lv. 2) set to 100 to 200 points/m³, and level 3 (Lv. 3) set to less than 100 points/m³, and the projection image 6c displayed in colors different according to the levels of point cloud density in the squares is generated.

By projecting this projection image 6c, a user can visually and intuitively recognize a situation such as which portion meets required density in the point cloud data of the measuring object S4.

Modifications of the projection image are not limited to these, and for example, the levels of point cloud density may be displayed like a heat map as with the projection image 6b. Alternatively, irregularities from the surface may be displayed in meshes.

The above-described modifications of the projection images 6b and 6c are applicable not only to the surveying apparatus 200 but also to the surveying apparatus 100.

### 3. Third Embodiment

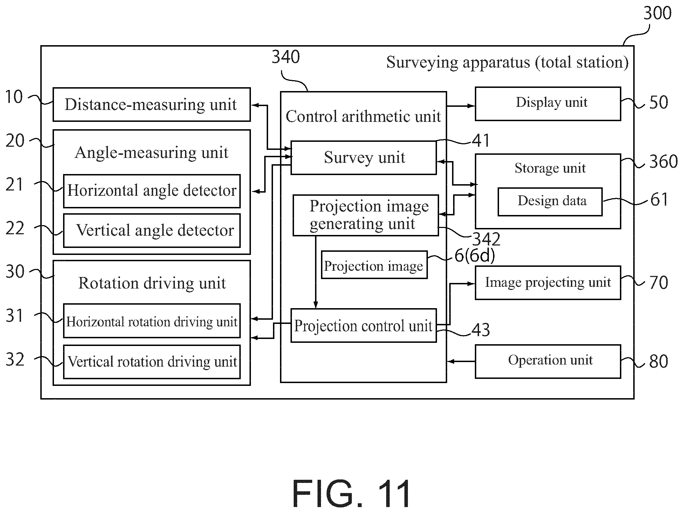

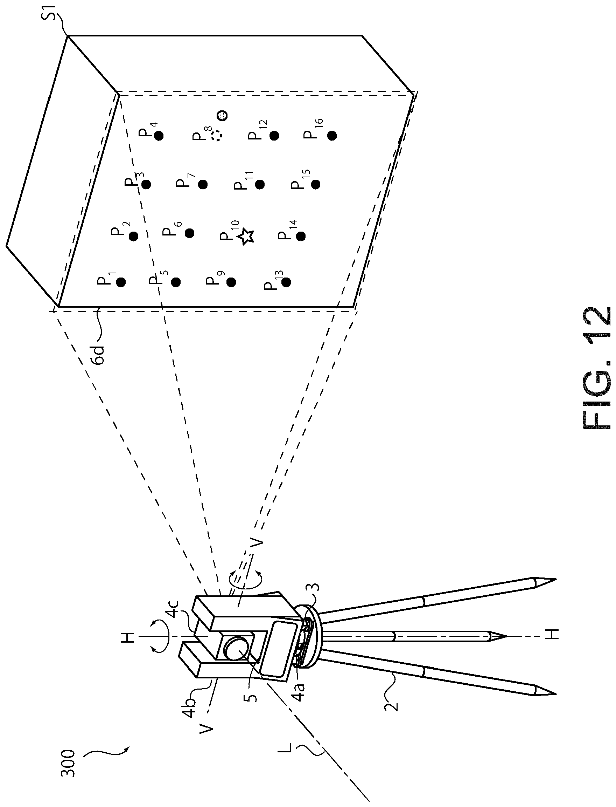

FIG. 11 is a configuration block diagram of a surveying apparatus 300 according to a third embodiment, and FIG. 12 is an external general view illustrating a state where the surveying apparatus 300 is projecting a projection image 6d, and illustrates a situation of measurement of the same site as in FIG. 1.

The surveying apparatus 300 is a total station having substantially the same configuration as that of the surveying apparatus 100, but is different in that a storage unit 360 has design data 61 of the measuring object S1, and the control arithmetic unit 340 includes a projection image generating unit 342 in place of the projection image generating unit 42.

The projection image generating unit 34 is configured to calculate a difference between the design data 61 and the measurement data when generating the projection image 6d, and generate an image displaying the difference from the measurement data in a recognizable manner.

For example, when there is a difference between the measurement data and the design data 61 as in the case where the design data 61 includes information on the measurement points P₁ to P₁₆, the measurement data of the point P₈ moves rightward from the point P₈ illustrated with a dashed line on the design data 61, and measurement data of the point P₁₀ has not been acquired, the deviating portion may be conspicuously displayed by being changed in color or shape as illustrated in FIG. 12.

With this configuration, a user can intuitively grasp the difference from the design data 61. The same modification can be applied to the surveying apparatus of the second embodiment, and can be applied in combination with the above-described modification of the projection image.

### 4. Other Modifications

The surveying apparatus according to the embodiments described above may be further modified as follows.
(1) The surveying apparatus is configured to be capable of generating a plurality of types of projection images, and capable of selecting the type of image to be generated according to a user's instruction. In addition, the surveying apparatus is configured to be capable of switching the projected image to a different type of projection image.
(2) The surveying apparatus is configured to be capable of changing colors and shapes of the respective elements in the projection image 6 from the state where the projection image is projected.

### REFERENCE SIGNS LIST

- 6, 6a, 6b, 6c:: Projection image
- 10:: Distance-measuring unit
- 20:: Angle-measuring unit
- 40:: Control arithmetic unit
- 41:: Survey unit
- 42:: Projection image generating unit
- 43:: Projection control unit
- 51:: Light irradiating device
- 70:: Image projecting unit
- 71:: Light irradiating device
- 72:: Display element
- 73:: Projector lens
- 100:: Surveying apparatus
- 200:: Surveying apparatus
- 240:: Control arithmetic unit
- 210:: Distance-measuring unit
- 242:: Projection image generating unit
- 300:: Surveying apparatus
- 340:: Control arithmetic unit
- 342:: Projection image generating unit

## Claims

1. A surveying apparatus (200) comprising:
a distance-measuring unit (210) configured to transmit distance-measuring light and measure a distance to a measurement point by receiving reflected distance-measuring light reflected by a measuring object;
an angle-measuring unit (20) configured to measure an angle to the measurement point by detecting an angle of the distance-measuring light;
a control arithmetic unit (240) including
a survey unit configured to acquire three-dimensional coordinates of the measurement point as measurement data by performing distance and angle measurements by controlling the distance-measuring unit and the angle-measuring unit,
a projection image generating unit (242) configured to generate a projection image for displaying the measurement data on a surface of the measuring object by acquiring a three-dimensional shape of the measuring object based on the measurement data, and
a projection control unit (242) configured to control projection of the projection image onto the measuring object; and
an image projecting unit (70) including a display element configured to form an image as the projection image, a light irradiating device configured to cause projection light to enter the display element, and a projector lens configured to project the projection image emitted from the display element onto the measuring object, wherein
the distance-measuring light is pulsed light, and the surveying apparatus (200) is a laser scanner configured to acquire three-dimensional point cloud data of the measuring object by scanning with the distance-measuring light in the vertical direction and the horizontal direction,
**characterized in that**:
the projection image generating unit generates (242), as the projection image, an image displaying levels of point cloud density of the three-dimensional point cloud data in a recognizable manner.

2. The surveying apparatus (200) according to Claim 1, wherein the projection image generating unit (242) generates, as the projection image, an image displaying the measurement point as a point.

3. The surveying apparatus (200) according to Claim 1, wherein the projection image generating unit (242) generates, as the projection image, an image displaying irregularities on a surface of the measuring object in a recognizable manner.

4. The surveying apparatus (200) according to Claim 1, further comprising:
a storage unit (60) configured to store design data of the measuring object, wherein
the projection image generating unit (242) generates, as the projection image, an image displaying a difference between the design data and the measurement data in a recognizable manner.

## Patentansprüche

1. Vermessungsvorrichtung (200), die aufweist:
eine Abstandsmesseinheit (210), die so ausgebildet ist, dass sie Abstandsmesslicht ausstrahlt und einen Abstand zu einem Messpunkt misst, indem sie reflektiertes Abstandmesslicht empfängt, das von einem Messobjekt reflektiert wird;
eine Winkelmesseinheit (20), die so ausgebildet ist, dass sie einen Winkel zu dem Messpunkt misst, indem sie einen Winkel des Abstandsmesslichts detektiert;
eine arithmetische Steuereinheit (240), die aufweist:
eine Vermessungseinheit, die so ausgebildet ist, dass sie dreidimensionale Koordinaten des Messpunkts als Messdaten erfasst, indem sie Abstands- und Winkelmessungen durch Steuerung der Abstandsmesseinheit und der Winkelmesseinheit durchführt,
eine Projektionsbilderzeugungseinheit (242), die so ausgebildet ist, dass sie ein Projektionsbild zur Anzeige der Messdaten auf einer Oberfläche des Messobjekts erzeugt, indem sie eine dreidimensionale Form des Messobjekts basierend auf den Messdaten erfasst, und
eine Projektionssteuereinheit (242), die so ausgebildet ist, dass sie eine Projektion des Projektionsbildes auf das Messobjekt steuert; und
eine Bildprojektionseinheit (70), die ein Anzeigeelement aufweist, das so ausgebildet ist, dass es ein Bild als das Projektionsbild bildet, eine Lichteinstrahlvorrichtung aufweist, die so ausgebildet ist, dass sie bewirkt, dass das Projektionslicht in das Anzeigeelement eintritt, und eine Projektorlinse aufweist, die so ausgebildet ist, dass sie das von dem Anzeigeelement auf das Messobjekt emittierte Projektionsbild projiziert, wobei
das Abstandsmesslicht gepulstes Licht ist und die Vermessungsvorrichtung (200) ein Laserscanner ist, der so ausgebildet ist, dass er dreidimensionale Punktwolkendaten des Messobjekts durch Scannen mit dem Abstandmesslicht in der vertikalen Richtung und der horizontalen Richtung erfasst,
**dadurch gekennzeichnet, dass**
die Projektionsbilderzeugungseinheit (242) ein Bild als Projektionsbild erzeugt, das Stufen der Punktwolkendichte der dreidimensionalen Punktwolkendaten auf erkennbare Weise anzeigt.

2. Vermessungsvorrichtung (200) nach Anspruch 1, wobei die Projektionsbilderzeugungseinheit (242) ein Bild als Projektionsbild erzeugt, das den Messpunkt als einen Punkt anzeigt.

3. Vermessungsvorrichtung (200) nach Anspruch 1, wobei die Projektionsbilderzeugungseinheit (242) ein Bild als Projektionsbild erzeugt, das Unregelmäßigkeiten auf einer Oberfläche des Messobjekts auf erkennbare Weise anzeigt.

4. Vermessungsvorrichtung (200) nach Anspruch 1, die ferner aufweist:
eine Speichereinheit (60), die so ausgebildet ist, dass sie Konstruktionsdaten des Messobjekts speichert, wobei
die Projektionsbilderzeugungseinheit (242) ein Bild als Projektionsbild erzeugt, das eine Differenz zwischen den Konstruktionsdaten und den Messdaten auf erkennbare Weise anzeigt.

## Revendications

1. Appareil d'arpentage (200) comprenant :
une unité de mesure de distance (210) configurée pour émettre une lumière de mesure de distance et mesurer une distance jusqu'à un point de mesure en recevant la lumière de mesure de distance réfléchie par un objet de mesure ;
une unité de mesure d'angle (20) configurée pour mesurer un angle par rapport au point de mesure en détectant un angle de la lumière de mesure de distance ;
une unité arithmétique de commande (240) comportant
une unité d'arpentage configurée pour acquérir des coordonnées tridimensionnelles du point de mesure en tant que données de mesure en effectuant des mesures de distance et d'angle en commandant l'unité de mesure de distance et l'unité de mesure d'angle,
une unité de génération d'image de projection (242) configurée pour générer une image de projection afin d'afficher les données de mesure sur une surface de l'objet de mesure par l'acquisition d'une forme tridimensionnelle de l'objet de mesure à partir des données de mesure, et
une unité de commande de projection (242) configurée pour commander la projection de l'image de projection sur l'objet de mesure ; et
une unité de projection d'images (70) comportant un élément d'affichage configuré pour former une image en tant qu'image de projection, un dispositif rayonnant configuré pour faire pénétrer la lumière de projection dans l'élément d'affichage, et une lentille de projecteur configurée pour projeter l'image de projection émise par l'élément d'affichage sur l'objet à mesurer, dans lequel
la lumière de mesure de distance est une lumière pulsée, et l'appareil d'arpentage (200) est un scanner laser configuré pour acquérir des données de nuage de points tridimensionnel de l'objet à mesurer en balayant avec la lumière de mesure de distance dans la direction verticale et dans la direction horizontale,
**caractérisé en ce que** :
l'unité de génération d'image de projection génère (242), en tant qu'image de projection, une image affichant les niveaux de densité du nuage de points des données du nuage de points tridimensionnel d'une manière reconnaissable.

2. Appareil d'arpentage (200) selon la revendication 1, dans lequel
l'unité de génération d'images de projection (242) génère, en tant qu'image de projection, une image affichant le point de mesure comme un point.

3. Appareil d'arpentage (200) selon la revendication 1, dans lequel
l'unité de génération d'images de projection (242) génère, en tant qu'image de projection, une image affichant des irrégularités sur une surface de l'objet de mesure d'une manière reconnaissable.

4. Appareil d'arpentage (200) selon la revendication 1, comprenant, en outre :
une unité de stockage (60) configurée pour stocker des données de conception de l'objet de mesure, dans lequel
l'unité de génération d'image de projection (242) génère, en tant qu'image de projection, une image affichant une différence entre les données de conception et les données de mesure d'une manière reconnaissable.
